## Europäisches Patentamt

## European Patent Office

## Office européen des brevets

(11) Publication number: **0 137 298**
**A2**

(12) # EUROPEAN PATENT APPLICATION

(21) Application number: **84110507.5**

(22) Date of filing: **04.09.84**

(51) Int. Cl.⁴: **G 01 G 21/22**

(30) Priority: **14.09.83 JP 168211/83**

(43) Date of publication of application:
**17.04.85 Bulletin 85/16**

(84) Designated Contracting States:
**DE FR GB**

(71) Applicant: **HITACHI, LTD.**
**6, Kanda Surugadai 4-chome Chiyoda-ku**
**Tokyo 100(JP)**

(72) Inventor: **Takezaki, Jiro**
**Bouda Apt. 214 2593, Takaba**
**Katsuta-shi Ibaraki-ken(JP)**

(72) Inventor: **Endo, Akira**
**5-48, Bizen-cho**
**Mito-shi Ibaraki-ken(JP)**

(72) Inventor: **Shibata, Takanori**
**4-15-12, Ohnuma-cho**
**Hitachi-shi Ibaraki-ken(JP)**

(72) Inventor: **Shirai, Hiroshi**
**467, Tabiko**
**Katsuta-shi Ibaraki-ken(JP)**

(72) Inventor: **Tsujii, Fumio**
**1060, Suifu-cho**
**Mito-shi Ibaraki-ken(JP)**

(72) Inventor: **Matsuoka, Yoji**
**Murata Apt. 13 1199-5, Senba-cho**
**Mito-shi Ibaraki-ken(JP)**

(74) Representative: **Patentanwälte Beetz sen. - Beetz jun.**
**Timpe - Siegfried - Schmitt-Fumian**
**Steinsdorfstrasse 10**
**D-8000 München 22(DE)**

(54) **Navigation system for automobile.**

(57) A navigation system for an automobile which obtains the present position of the automobile by detecting the speed of travel and the direction of said automobile, and indicates the present position of said automobile on a corresponding map, and in which said map is divided into a plurality of blocks M (m, n) and is recorded in that format on magnetic tape. In the system, an external storage (13,16,17) for reading out desired map data is provided, search data A, B modulated at a low frequency is inserted in front of a plurality of units of map data recorded separately on said magnetic tape, and said desired map data is searched for and specified by reading said search data ① - ⑦ while searching said map at high speed. The external storage is provided with a means (163,164,166) for reading said search data ① - ⑦ irrespective of any change in running speed of said magnetic tape during a search of said map at high speed.

*FIG. 3*

EP 0 137 298 A2

0137298

SPECIFICATION

Title of the Invention:

NAVIGATION SYSTEM FOR AUTOMOBILE


Background of the Invention

This invention relates to a navigation system for an automobile which indicates the current position of the automobile on a map, and is particularly concerned with a navigation system for an automobile which is provided with external storage which is capable of searching through map data recorded on a magnetic tape, at high speed and accurately.

A navigation system for an automobile comprises a display of the current position of an automobile on a cathode-ray tube (CRT) mounted on the automobile, together with a display of a map corresponding to the running state and position of the automobile, and the map data displayed thereon is usually recorded magnetically on a cassette tape, for example, and is read out therefrom during use. Cassette tape is a cheap and handy recording medium, and many automobiles are now equipped with audio cassette tape recorders. Various proposals have examined the utilization of such a cassette tape recorder mounted in an automobile as an apparatus for reproducing map data, but nothing has been realized in practice so far. Because it has the function of recording music on tape and playing it back, an audio cassette tape recorder has a tape speed and a narrow frequency bandwidth, therefore it is very difficult to obtain high-speed data transmission therewith. This means that retrieving desired map data from the cassette tape and loading it into an internal memory of the navigation system inevitably takes an excessively long time, which has hindered the development of such a system.

In a navigation system for an automobile, when the current position of the automobile moves off the map on the display, it is necessary that the map is rewritten so that the automobile's current position is always shown correctly on the map. Consequently, an essential requirement for a practical navigation system is that the time required for retrieving and loading the desired data file from the cassette tape should be reasonably short. Compared with the time for reading out map data, which is be determined by the read rate of the apparatus and the data length, the search time needed for retrieving the desired map file can be reduced by some contrivance, and thus a search system with which map files can be searched accurately within a short period of time is required.

However, in a digital tape apparatus, the tape runs at a fast speed such as 38 cm/sec, the head, circuits, etc., have a wide frequency bandwidth, and thus files can be searched at high speed, but the problem is that an audio tape recorder can only handle signals that have a high frequency of 10 KHz

0137298

or so, and the frequency bandwidth is relatively narrow. Accordingly, when an audio tape recorder is used as external storage for a navigation system, the maps therein cannot be searched at high speed.   Particularly during a search when the tape recorder is operating in fast-forward, the frequency component of the recorded data signal goes out of the frequency bandwidth of the tape recorder, a playback signal is difficult to obtain, and thus files cannot be retrieved accurately.

Japanese Patent Laid-Open No. 75022/1983, for example, discloses a system which suggests a method of solving this problem, but the system comprises the insertion of a low-frequency signal between individual recorded blocks of data on the tape, counting the passage of data blocks by detecting this low-frequency signal while performing a fast-forward search, and retrieving the desired file according to this count.

However, when this prior-art system is applied to a navigation system, the following problems could remain. Many separated blocks of map data are recorded on the cassette tape, and each is arranged one-dimensionally along the tape. However, when the whole of Japan is shown on a single map, for example, and the map is divided into a plurality of blocks, several portions thereof are not needed because they consist of sea alone, and it is desirable that such portions are omitted from the tape during recording so as to reduce the length of tape used as far as possible. Accordingly, the retrieval of a desired file by a simple counting of the passage of data blocks becomes inaccurate, and thus to provide accurate retrieval, the label of the data must also be read out at the read rate when a data block is detected, to ensure that it is identified as the desired map data, which extends the access time.

When retrieval is effected by counting the passage of low-frequency signals inserted between blocks of map data, as described above, map data cannot be specified unless a count is made cumulatively from the first portion recorded on the cassette tape, and when, for example, the apparatus is reactuated after power has been turned off temporarily, the tape must be rewound and the number of passages of blocks must be recounted from the beginning, which hinders high-speed retrieval.

To remove these defects, it has been proposed that a retrieval code based on the low-frequency signal is inserted before each block of map data, but in an audio tape recorder, the running speed of the tape fluctuates during a fast-forward search, so that the frequency of the signal being detected also changes when trying to read the retrieval code, and the map data can not be searched accurately.

0137298

## Summary of the Invention

This invention has been developed in view of this defects which are inevitable in the prior art, and its object is to provide a navigation system for an automobile which can use an audio cassette tape recorder or the like which does not have a constant tape running speed during a fast-forward search as an input device for map data, that is, as external storage, and is particularly directed to the provision of a navigation system for an automobile which has external storage which can retrieve directly any desired map data at high speed.

According to this invention, so as to achieve the above object, search data specifying the map is modulated at a low frequency and is inserted in each of data blocks recorded on a magnetic tape of external storage, the desired map data is retrieved by reading the search data during a high-speed search of the map, and means for reading the search data, irrespective of any change in running speed of the magnetic tape during a high-speed search is also provided.

According to one preferred embodiment of this invention, a reference criterion signal section in which a reference signal based on a predetermined low-frequency signal is recorded is provided in a search data divider in which the above search data is inserted, and the search data is read according to the reference signal during the high-speed search.

## Brief Description of the Drawings

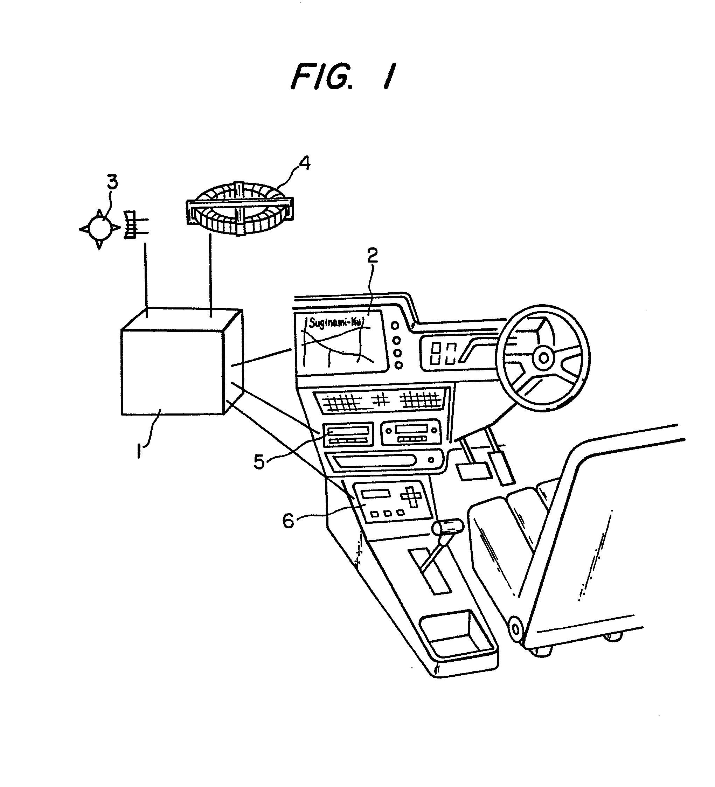

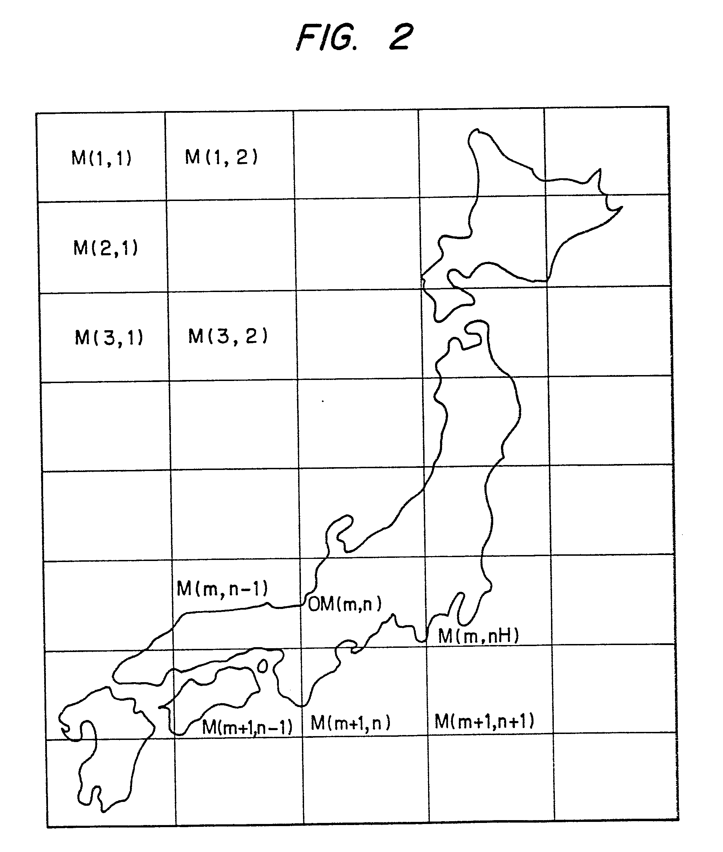

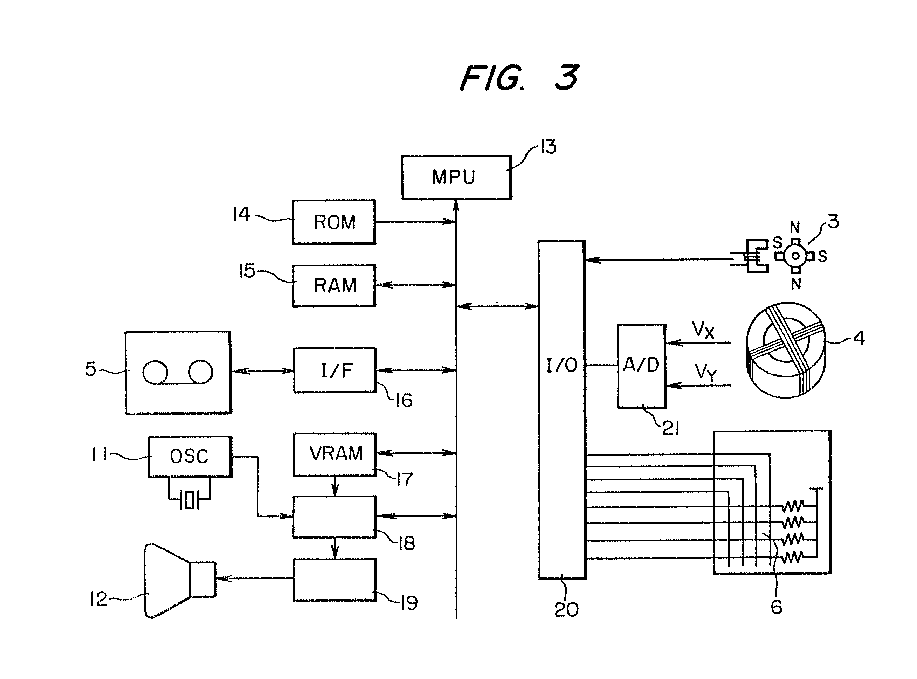

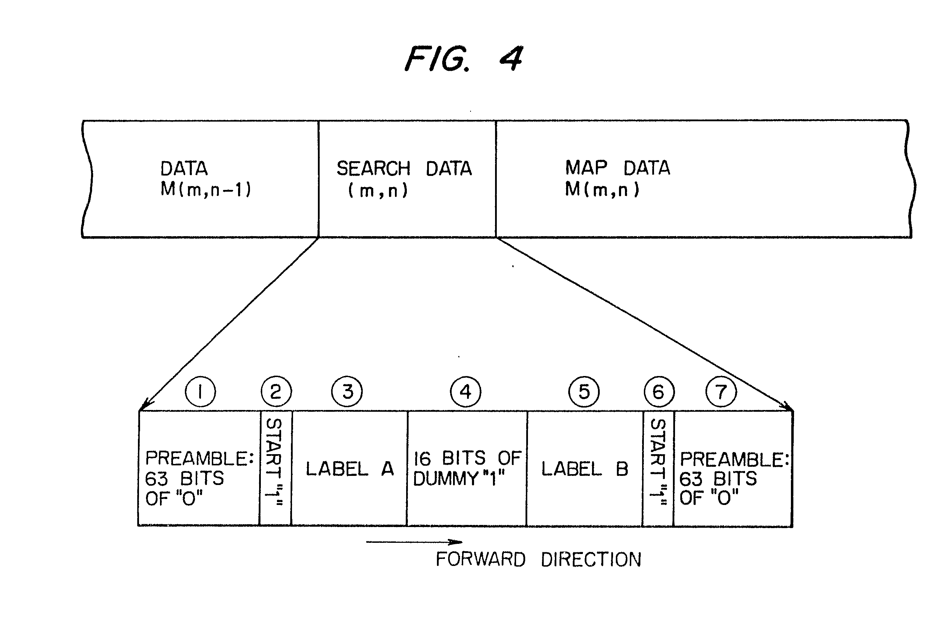

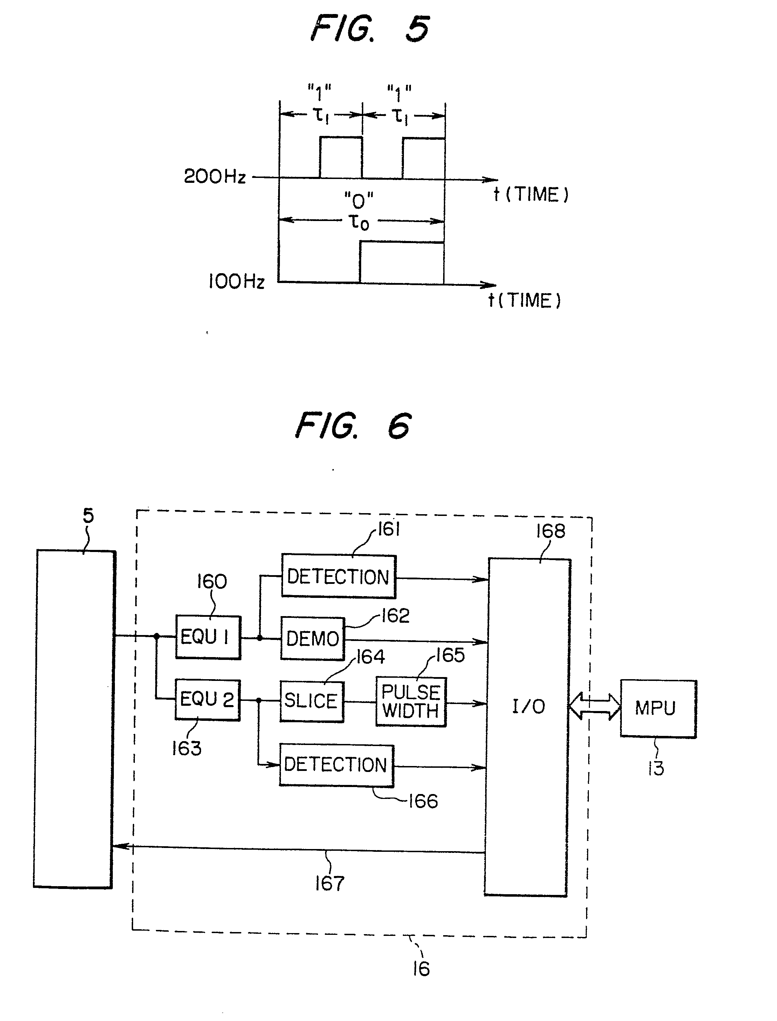

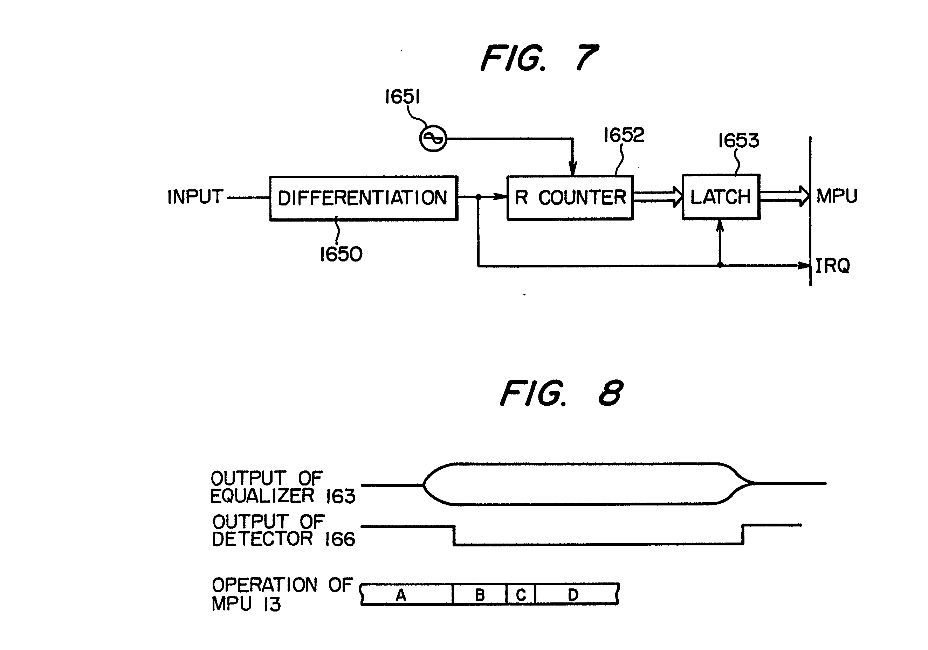

Fig. 1 shows the layout of a navigation system for an automobile; Fig. 2 shows how a map stored on a magnetic tape is arranged; Fig. 3 is a diagram of the circuit configuration of the navigation system; Fig. 4 shows map data and the recording format of search data; Fig. 5 is a diagram of the modulation system for the search data; Fig. 6 is a diagram of the interface circuit between the cassette deck and the MPU; Fig. 7 is a diagram of the pulse width measuring circuit; Fig. 8 shows the process timing of MPU.

## Detailed Description of Preferred Embodiment

A preferred embodiment of this invention will now be described with reference to the accompanying drawings. Fig. 1 shows a navigation system mounted in an automobile, and its components. A control device 1 reads map data from an audio cassette deck 5 and displays a map on a CRT device 2. Operator's commands are input from a keyboard 6 acting as an input device, so that the current position, destination and other necessary data is stored therein. As the automobile travels, the control device 1 computes the outputs from a distance sensor 3 and a direction sensor 4 to obtain data such as the current position of the automobile and the distance to the destination, and displays them over the map displayed on the CRT 2.

A more detailed description will now be given of the control portion of the navigation system, with reference to Fig. 3.

The system is controlled entirely by a microprocessing unit (MPU) 13 which operates according to programs stored in a read-only memory (ROM) 14. A random access memory (RAM) 15 is used as a stack or a buffer memory for the MPU 13. When the system is initialized, data on the current position, etc., is input by the operator through the keyboard 6, the MPU 13 controls the cassette deck 5 according to this data to search for the desired map data, and then transmits that map data to a video RAM (VRAM) 17 through an interface 16. The map data written into the VRAM 17 is converted into signal format so that it can be displayed on the CRT 12 by a CRT controller 18 such as for example, the HD6845S of Hitachi, Ltd., and is then displayed on the CRT 12 by a driver deflecting circuit 19. A master clock for the CRT controller 18 is supplied from an oscillator 11.

The current position of the automobile is obtainable from the direction and distance travelled. The direction sensor 4 of Fig. 3 is one that uses the so-called flux gate system, whereby an absolute bearing is obtained from a ratio of voltages Vx, Vy generated is coils wound orthogonally. The voltages Vx, Vy are digitized by an analogto-digital converter 21 and are then read into the MPU 13 through an input/output port (I/O) 20. The distance sensor 3 can, for example, detect the rotation of a permanent magnet mounted on a shaft interlocking with an axle of the automobile, by a pickup coil. Distance is read into the MPU 13 as a pulse train.

The map shown in Fig. 2 is stored on the cassette tape. The map is divided into a matrix which is numbered in rows and columns. This can facilitate and ensure the retrieval of the map in answer to the movement of the automobile. When the map is numbered as shown in Fig. 2, and the current position moves southward off map M(2, 2), a row element is incremented by 1, and the map M(3, 2) can be searched for. A similar process is used when the automobile moves north, east or west. Since the portions of the maps which include sea are not needed for an automobile, those portions which only have land are recorded on the cassette tape.

As shown in Fig. 4, each block of map data is arranged and recorded one-dimensionally. One block of data inserted in an inter-record gap (IRG) in which nothing is recorded corresponds to one map sheet and consist of a header indicating the head of the data, a map number (m, n), map data, a postamble indicating the end of the block, etc.

The frequency of the signal being detected shifts to a higher band during a fast-forward search so that obviously the data cannot be read out, and even the detection of a record block is almost impossible and thus the desired record block cannot be searched for with certainty. This frequency shift rate could exceed 30 times the tape speed during playback, and thus the frequency component of the signal being detected can end up far outside the frequency band of the cassette tape recorder.

In this embodiment of the present invention, a search data divider which is modulated at a low frequency is inserted between the blocks of map data recorded at a relatively high density (high frequency), as shown in Fig. 4. The search data divider has a preamble section consisting of 63 bits of "0" signal, a start section consisting of a 1-bit "1" signal, a label A section in which search data for actually searching the map itself is recorded, a dummy section consisting of 16 bits of "1" signal, a label B section in which more search data is recorded, a start section, and a preamble section. In the label A, B sections, a map number $M(m, n)$ is recorded in both the forward and the reverse directions. The data in the search data divider is thus arranged symmetrically left and right, so that the data can be read in the same way, irrespectively of the direction in which the tape runs. However, instead of this symmetrical data layout, it is conceivable to change the data read-out sequence will be changed according to the direction in which the tape runs.

In this case, the search data divider comprises a preamble section, a start section, a label A section, a start section and a preamble section, in that order.  When the tape runs forward, the search data in the label A section is read out from the LSB (Least Significant Bit); but when it runs backward, the MSB (Most Significant Bit) is read first.

As described above, the map searched. is excecuted by searching the map numbers in the label sections at high speed, and the desired file is searched for by using that map number.

The design of a modulation system for the search data must take into consideration fluctuations in the tape running speed during use, particularly during a fast-forward search. That is to say, the speed can vary by a factor of at least three during the start and stop of the running of the tape, depending on the apparatus.  Consequently, it goes without saying that what is required is a system that can search the map data accurately, despite these speed fluctuations.

The method of frequency modulation employed in this embodiment of the present invention assigns, as shown in Fig. 5, the logical value "0" to one pulse of a 100 Hz frequency signal, and the logical value "1" to one pulse of a ·200 Hz frequency signal.  These signals are controlled to have the same phase (at the low-level portion of each signal shown by the signal waveforms of Fig. 5) at the beginning of each bit.  The signals "0" and "1" have unequal length codes (the length $\tau_1$ of the signal for "1" is different from the

length $\tau_2$ of the signal for "0"), because the recording density of this data must be kept as high as possible.

Since the running speed of the tape changes abruptly it is difficult to equalize the waveforms, and hence a modulated waveform which can ensure a phase discontinuity is used between bits, to prevent any distortion of the regenerative waveform. It goes without saying that the two frequencies (the low-frequency signals of 100 and 200 Hz) should be selected so that they are within the frequency band of the cassette deck, even during fast-forward search.

A method for reading such search data will be described in detail below.

An interface circuit 16 between the cassette deck 5 and the MPU 13 will first be described with reference to Fig. 6 which illustrates the interface circuit 16 in detail. The waveform of a reproduced signal from the cassette deck 5 is equalized by an equalizer 160 during normal playback. In this case, the signal components of the search data are removed. The signal level thereof is detected by a detector 161, and the MPU is advised of whether or not map data is present, through an I/O port 168. The map data is demodulated by a demodulator 162 and input to the MPU.

The cassette deck 5 is kept ready for fast forward or rewind be a control line 167 during the search. In this case, it is obvious that the reproduce head of the cassette deck 5 is kept in contact with the tape. The search signal is subjected to a frequency shift (for example, a 100 Hz signal is shifted to 3 KHz and a 200 Hz signal is shifted to 6 KHz during fast forward at 30 times the normal speed), and is input to a waveform-shaping circuit 164 and a detection circuit 166 through an equalizer 163. The equalizer 163 is a band-pass filter of a bandwidth sufficient to cope with fluctuations in the tape speed during fast forward. In this case, the detector 166 generates a detection output which corresponds only to the search data, and advises the MPU 13. The waveform-shaping circuit 164 slices the signal according to a reference level to obtain the original digital waveform.

A pulse width measuring circuit 165 measures the pulse width, which is read into the MPU. As shown in Fig. 7, for example, the pulse width measuring circuit 165 detects an edge of the signal by a differentiation circuit 1650, stores the value held by a counter 1652 in a latch 1653 and resets the counter for the next count. A clock for the counter is input from an oscillator 1651. The end of the pulse width measurement can be posted by interrupting the MPU by the edge pulse.

A method of reading the search data which is practiced by this embodiment of the present invention will now be described concretely. The tape speed during fast forward changes abruptly, but the effect of this change removed, and the following processing is executed, by the MPU 13 in this embodiment, to ensure that the search data is always read accurately. An output waveform from the equalizer 163, an output from the detector 166 and the timing of the internal operation of the MPU 13 are shown in Fig. 8. The MPU 13 waits for a detection output from the detector 166 at timing A in Fig. 8, and then measures a pulse width corresponding to the "0" of the preamble section of Fig. 4 for 32 pulses at timing B, to obtain a mean value thereof. In Fig. 4, 63 bits of "0" are inserted in the preamble section, theoretically, the same number of bits can be used to obtain the mean value. The length $\tau_0$ of the signal corresponding to "0" is obtained from the mean value, and this is multiplied by 0.75 to provide a reference value for deciding whether the subsequent signal is "0" or "1". The search data dividers are only a few centimeters long, this is thought to keep the tape speed essentially uniform without any abrupt changes. Therefore hardly any error occurs, even when a criterion value $\tau_A$ measured at the head of the signal is empolyed as all the recorded map blocks. A start bit "1" is searched for at a timing C, using a reference criterion value obtained previously. When a start bit has been found out, the subsequent data is read out in units of 8 bits. This operation can be carried out in the same way for both the forward and reverse directions. Despite the abrupt changes in tape speed due to fast forward, the files can be searched effectively by demodulating the search data as described above.

According to the present invention described above, search data which specifies a map number, even during fast forward, can be read accurately despite changes in the tape running speed ruing fast forward, and a navigation system for an automobile in which files can be searched accurately and at high speed can be provided.

Claims

1. In a navigation system for an automobile which obtains the current position of an automobile by detecting the speed of travel and the direction of said automobile, and indicates the current position of said automobile on a corresponding map, and in which said map is divided into a plurality of blocks M (m, n) and is recorded in that format on magnetic tape, an external storage (13, 16, 17) for reading out desired map data is provided, search data ① - ⑦ modulated at a low frequency is inserted in front of a plurality of units of map data recorded separately on said magnetic tape, said desired map data is searched for and specified by reading said search data while searching said map at high speed, the improvement wherein that said external storage is provided with a means (163, 164, 166) for reading said search data irrespective of any change in running speed of said magnetic tape during a search of said map at high speed.

2. The navigation system for an automobile as defined in Claim 1, wherein a search data divider ① - ⑦ into which said search data (A, B) on said magnetic tape is inserted is provided with a reference criterion signal section ① , ② , ⑥ , ⑦ in which a reference signal based on a predetermined low frequency is recorded, said external storage obtains a reference criterion frequency corresponding to said running speed of said magnetic tape by reading out a signal recorded in said reference criterion signal section of said magnetic tape, and said search data is then read out according to said reference criterion frequency.

3. The navigation system for an automobile as defined in Claim 2, wherein data specifying the map recorded in said search data divider ①-⑦ is coded by at least two different low-frequency signals, one of said two low-frequency signals being recorded in said reference criterion signal section.

4. The navigation system for an automobile as defined in Claim 3, wherein said one ① of said low-frequency signals in said reference criterion signal section ①,② continues for a length of time equivalent to a plurality of bits, the wavelengths of said plurality of bits of low-frequency signal are detected during high-speed searching of said tape, and the wavelength of said reference criterion frequency signal ①,② is then obtained from the mean value of said wavelengths.

5. The navigation system for an automobile as defined in Claim 2, wherein said search data divider ①-⑦ recorded on said magnetic tape has identical contents in both the forward and reverse directions in which said tape runs.

6. The navigation system for an automobile as defined in Claim 5, wherein said reference criterion signal section ①,②,⑥,⑦ is inserted onto said magnetic tape at both the head and end portions of said search data divider.

0137298

# FIG. 1

## FIG. 2

M(1,1)  M(1,2)

M(2,1)

M(3,1)  M(3,2)

M(m,n-1)  OM(m,n)  M(m,nH)

M(m+1,n-1)  M(m+1,n)  M(m+1,n+1)

FIG. 3

# FIG. 4

| DATA<br>M(m,n-1) | SEARCH DATA<br>(m,n) | MAP DATA<br>M(m,n) |
|---|---|---|

| ① | ② | ③ | ④ | ⑤ | ⑥ | ⑦ |
|---|---|---|---|---|---|---|
| PREAMBLE:<br>63 BITS<br>OF "O" | START "1" | LABEL A | 16 BITS OF<br>DUMMY "1" | LABEL B | START "1" | PREAMBLE:<br>63 BITS<br>OF "O" |

→

FORWARD DIRECTION

# FIG. 5

# FIG. 6

## FIG. 7

1651

INPUT — DIFFERENTIATION · R COUNTER ⟹ LATCH ⟹ MPU

1650 · 1652 · 1653 · IRQ

## FIG. 8

OUTPUT OF
EQUALIZER 163

OUTPUT OF
DETECTOR 166

OPERATION OF
MPU 13    | A | B | C | D |